Europäisches Patentamt

European Patent Office

Office européen des brevets

(19)

(11) Numéro de publication: **0 030 891**
**B1**

(12) **FASCICULE DE BREVET EUROPEEN**

(45) Date de publication du fascicule du brevet:
**11.01.84**

(51) Int. Cl.³: **G 01 C 19/64, H 01 S 3/083**

(21) Numéro de dépôt: **80401763.0**

(22) Date de dépôt: **09.12.80**

(54) **Procédé et dispositif de mesure de la différence de phase des ondes circulant dans un interféromètre en anneau.**

(30) Priorité: **14.12.79 FR 7930723**

(43) Date de publication de la demande:
**24.06.81 Bulletin 81/25**

(45) Mention de la délivrance du brevet:
**11.01.84 Bulletin 84/2**

(84) Etats contractants désignés:
**DE GB NL SE**

(56) Documents cités:
**DE - A - 1 523 271**
**FR - A - 1 546 653**
**FR - A - 2 271 542**
**FR - A - 2 283 424**
**FR - A - 2 409 518**
**US - A - 3 512 890**

**ELECTRONICS LETTERS, vol. 5, no. 15, 24 juillet 1969 HERTS (GB) BOOT et al.: "Ring laser bias using reciprocal optical components", pages 347-348 JOURNAL OF THE OPTICAL SOCIETY OF AMERICA, vol. 62, no. 11, novembre 1972 NEW YORK (US), K.P. KOVACS: "Deforming Light-Path Ring Laser Experiments", pages 1264-1267**

(73) Titulaire: **THOMSON-CSF, 173, Boulevard Haussmann, F-75379 Paris Cedex 08 (FR)**

(72) Inventeur: **Arditty, Hervé, THOMSON-CSF SCPI 173, bld Haussmann, F-75360 Paris Cedex 08 (FR)**
Inventeur: **Papuchon, Michel, THOMSON-CSF SCPI 173, bld Haussmann, F-75360 Paris Cedex 08 (FR)**
Inventeur: **Puech, Claude, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

**0 030 891**

### Procede et dispositif de mesure de la difference de phase des ondes circulant dans un Interferometre en anneau

La présente invention se rapporte à un procédé et à à un dispositif de mesure de la différence de phase des ondes circulant dans un interféromètre en anneau, encore appelé interféromètre de Sagnac.

Un tel interféromètre comporte principalement une source d'énergie lumineuse généralement constituée par un laser; un dispositif optique constitué soit d'un certain nombre de miroirs, soit d'une fibre optique enroulée sur elle-même, ce dispositif formant guide d'onde; un dispositif de séparation et de mélange de la lumière et un dispositif de détection et de traitement du signal détecté.

Il est connu que dans ces interféromètres, il existe deux ondes issues du dispositif séparateur et parcourant en sens opposés un même trajet optique.

Une propriété fondamentale des interféromètres en anneau est la réciprocité qui peut s'exprimer comme suit: toute perturbation du trajet optique affecte semblablement les deux ondes malgré que ces deux ondes ne la subissent ni exactement au même instant, ni dans le même sens.

Ils existent cependant deux types de perturbations qui affecte la réciprocité. Il s'agit d'une part des perturbations qui varient dans le temps, ce dans un laps de temps comparable au temps que mettent les ondes à se propager le long du chemin optique de l'interféromètre; et d'autre part, les pertubations dites »non réciproques«, c'est à dire les pertubations n'ayant pas le même effet sur les ondes selon qu'elles se propagent dans un sens ou dans un autre le long du chemin optique. Il s'agit d'effets physiques qui détruisent la symétrie du milieu dans lequel se propagent les ondes.

Deux effets connus présentent ce dernier type de perturbations:

— l'effet Faraday, ou effet magnéto-optique colinéaire, par lequel un champ magnétique crée une orientation préférentielle du spin des électrons d'un matériau optique.
— et l'effet Sagnac, ou effet intertiel relativiste, dans lequel la rotation de l'interféromètre par rapport à un repère Galliléen détruit la symétrie du temps de propagation. Cet effet est mis à profit pour réaliser des gyromètres notamment.

En l'absence de la manisfestation de perturbations »non réciproques«, la différence de phase (que l'on appelera dans ce qui suit $(\Delta\Phi)$) entre les deux ondes qui se recombinent dans le dispositif de séparation et de mélange après avoir parcouru le chemin optique est nulle. Le dispositif de détection et de traitement détecte des signauc représentant la puissance optique de l'onde composite obtenue après recombinaison. Cette puissance peut se décomposer dans les interféromètres de l'art connu en deux composantes: une composante constante et une composante proportionnelle à Cos $(\Delta\Phi)$, la différence de phase $\Delta\varphi$ n'existant qu'à l'apparition de perturbations »non-réciproques«.

Si on désire mesurer des perturbations de faible amplitude, par exemple dans le cas de gyromètres, des faibles vitesse de rotation, la composante contenant le terme en Cos $(\Delta\Phi)$ varie peu, puisque le déphasage $\Delta\Phi$ est proche de zéro.

Il est alors nécessaire d'introduire artificiellement un déphasage supplémentaire fixe ou »biais nonréciproque« pour augmenter la sensibilité de la mesure. Un cas particulièrement intéressant est celui où le nouveau déphasage mesuré $\Delta\Phi'$est tel que $\Delta\Phi' = \Delta\Phi + \dfrac{\pi}{2}$. Dans ce cas la sensibilité est maximale puisque le terme à mesurer est proportionnel à

$$\mathrm{Cos}\left(\Delta\,\Phi + \frac{\pi}{2}\right),$$

c'est-à-dire à sin $(\Delta\Phi)$.

Bien que séduisant ce procédé s'est heurté jusqu'à présent à des difficultés de réalisation et notamment à la possibilité de réaliser un dispositif introduisant un »biais non-réciproque« suffisament stable pour être utilisable. L'instabilité des dispositifs de l'art connu est en général du même ordre de grandeur que les variations de la grandeur à mesurer.

On a également proposé des méthodes visant à obtenir une plus grande stabilité de ces dispositifs, mais l'a-mélioration de la sensibilité de la mesure est cependant beaucoup plus faible que celle que l'on peut espérer atteindre, la sensibilité maximale théorique étant déterminée par les calculs de limite due au bruit quantique.

Pour pallier ces inconvénients l'invention propose un procédé permettant de déplacer le point de fonctionnement d'un interféromètre en anneau de manière a obtenir un gain en sensibilité dans la mesure d'un effet physique introduisant des perturbations »nonréciproques« de faible amplitude, ce sans faire intervenir un »biais non-réciproque«, ni exiger une grande stabilité des phénomènes mis en jeu.

Pour ce faire, selon la caractésistique principale du procédé de l'invention, il est réalisé une modulation de phase périodique et réciproque des ondes se propageant en sens inverse dans l'anneau, à la fréquence $(1/2\tau)$, $\tau$ étant le temps que met chacune des ondes pour pracourir le chemin

2

optique défini par l'anneau.

Il est connu d'imprimer à ces ondes une modulation à variation lente devant le temps de parcours dans un but de discriminer le sens de rotation d'un interféromètre en anneau. Une telle disposition est décrite dans le brevet US-A-3 512 890.

Il existe par ailleurs des interféromètres de type et de fonctionnement différents de l'interféromètre en anneau qui vient d'être décrit. Ces interféromètres sont connus sous les noms de gyrolaser ou anneau laser, comportant une cavité optique à milieu actif (amplificateur d'ondes).

Ce type d'interféromètre génère des ondes dont la fréquence varie linéairement sur une grande plage en fonction de la vitesse de rotation.

Ces interféromètres ont l'inconvénient de présenter un phénomène parasite qui leur est propre, connu sous le nom de phénomène de verrouillage de mode, qui à lieu pour toute vitesse de rotation inférieure à une valeur finie minimale, ainsi qu'une plage de fonctionnement non-linéaire de raccordement avec la plage de fonctionnement linéaire précitée. La modulation des ondes se déplaçant en sens contraire dans des conditions analogues à ce qui a été décrit précédemment pour la détermination du sens de rotation permet aussi de s'affranchir de ces phénomènes parasites. Une telle disposition est décrite dans le brevet FR-A-1 546 653 et dans l'article paru dans »Electronics Letters«, vol. 5, n° 15, 24 juillet 1969, pages 347 — 348.

L'objet de l'invention est donc un procédé de mesure de la différence de phase des ondes électromagnétiques circulant en sens inverses dans un interféromètre en anneau, comprenant les étapes de génération d'une onde électromagnétique, de séparation de cette onde électromagnétique en deux composantes en phase et d'injection de ces composantes aux extrémités de l'anneau pour former lesdites deux ondes circulant en sens inverses, de modulation périodique et réciproque de la phase de ces deux ondes, de recombinaison de ces deux ondes aux extrémités de l'anneau et de détection des deux ondes recombinées; caractérisé en ce que l'étape de modulation est réalisée en modulant ladite phase des deux ondes circulant en sens inverses, au moins à l'une des extrémités de l'anneau, selon une fonction vérifiant la relation $\Phi(t) = \Phi(t + 2\tau)$ dans laquelle $\tau$ est le temps que met chacune des ondes pour parcourir le chemin optique défini par l'anneau et en ce que l'étape de détection de la différence de phase entre les ondes recombinées est réalisée en mesurant à la fréquence $(1/2\tau)$ ou a un multiple entier (k) de cette fréquence la puissance optique de la composante des ondes recombinées proportionnelles au sinus de la différence de phase entre ces ondes.

L'invention a encore pour l'objet un dispositif pour la mise en oeuvre d'un tel procédé selon la revendication 6.

L'invention sera mieux comprise et d'autres avantages apparaitront à l'aide de la description qui suit et des figures annexées.

— la figure 1 est un interféromètre en anneau de l'art connu

— la figure 2 est un diagramme représentant la variation de la puissance optique détectée en fonction de la différence de phase entre les deux ondes circulant dans l'anneau de l'interféromètre représenté à la figure 1

— la figure 3 illustre un procédé permettant un gain en sensiblité selon l'art connu

— les figures 4 a 8 sont des diagrammes illustrant des aspects particuliers du procédé selon l'invention

— la figure 9 illustre schématiquement une première variante d'un dispositif mettant en œuvre le procédé de l'invention

— la figure 10 illustre schématiquement une seconde variante de dispositif

— la figure 11 illustre schématiquement une troisième variante de dispositif dans lequel des fibres optiques sont utilisées

— les figures 12 à 15 sont des exemples de réalisation de modulateurs de phase utilisés par l'invention.

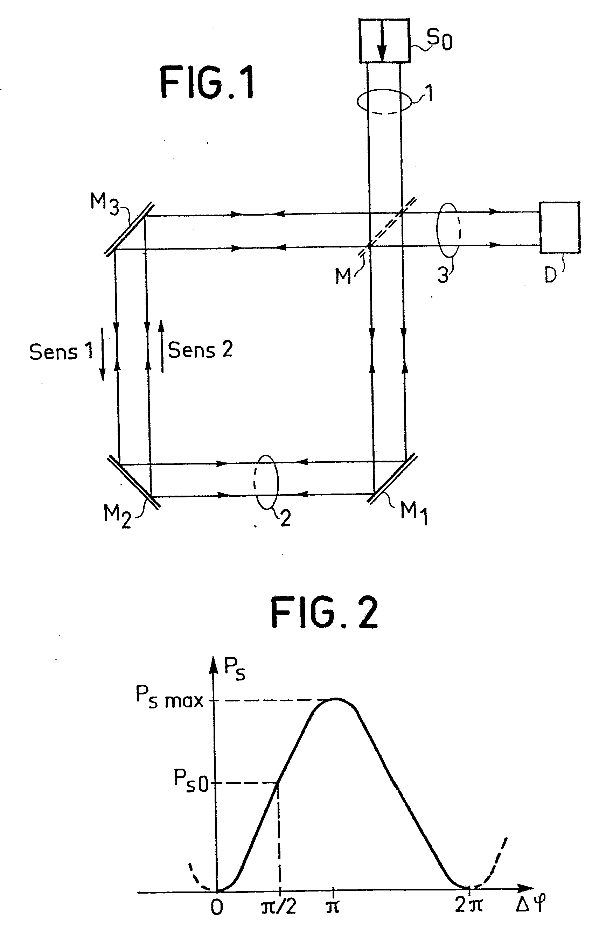

La figure 1 représente schématiquement un interféromètre en anneau de l'art connu.

Une source laser $S_0$ produit un faisceau de rayons parallèle 1 vers un dispositif séparateur constitué par une lame ou un miroir semi-transparent M.

Un certain nombre de miroirs (trois par exemple sur la figure 1 : $M_1$ à $M_3$) définissent un trajet optique formant l'anneau de l'interféromètre et rebouclé sur le dispositif répartiteur M qui joue également le rôle d'un dispositif de mélange et définit ainsi une branche de sortie 3. Le faisceau émergeant est alors dirigé vers un dispositif D de détection et de traitement des signaux détectés.

L'anneau est en réalité, comme il est connu, parcouru par deux ondes se propageant en sens inverses: l'une dans le sens horaire (ou sens 2), l'autre dans le sens anti-horaire (ou sens 1). Ces deux ondes se recombine sur la lame séparatrice M. Le résultat de cette recombinaison peut être observé dans la branche de sortie 3.

Dans la branche d'entrée 1, l'équation suivante est vérifiée:

$$P_e = P_{1e} + P_{2e} + 2\sqrt{P_{1e}P_{2e}} \, \text{Cos} \, (\Delta \Phi) . \tag{1}$$

Dans la branche de sortie 3, l'équation suivante est vérifiée:

$$P_s = P_{1s} + P_{2s} - 2\sqrt{P_{1s}P_{2s}} \cos(\Delta\Phi) \tag{2}$$

dans lesquelles $P_e$ et $P_s$ sont les puissances optiques que l'on peut mesurer respectivement dans les branches d'entrée 1 et de sortie 3 et $P_{ni}$ étant la puissance optique que l'on mesurerait dans la branche i, si seule l'onde se propageant dans le sens n était considérée. $\Delta\Phi$ est la différence de phase entre les deux ondes se propageant en sens inverse dans l'anneau 2 au moment de la recombinaison. En l'absence de perturbation »non-réciproque«, on l'a vu, cette différence de phase $\Delta\Phi$ est nulle.

Si on considère, à titre d'exemple non limitatif, le cas particulier d'un gyromètre mettant en œuvre un interféromètre à anneau, une perturbation »non-réciproque« va être créée par la mise en rotation du gyromètre. Dans ce cas la différence de phase $\Delta\Phi$ n'est plus nulle. La relation donnant $\Delta\Phi$ est:

$$\Delta\Phi = \alpha\Omega . \tag{3}$$

Dans laquelle $\Omega$ est la vitesse de rotation et $\alpha$ est une variable donnée par la relation:

$$\alpha = K \cdot \frac{L}{\lambda c} \tag{4}$$

dans laquelle: K est une constante dépendant de la géométrie du gyromètre

— L la longueur du parcours optique
— $\lambda$ la longueur d'onde de la lumière produite par la source laser $S_0$
— et c la vitesse de la lumière dans l'anneau 2.

Lorsque la vitesse de rotation $\Omega$ augmente la différence de phase $\Delta\Phi$ augmente dans les mêmes proportions, le coefficient $\lambda$ de la relation (3) restant constant. La puissance optique $P_s$ dans la branche de sortie 3 évolue selon une loi cosinusoïdale de part le troisième terme de la relation (2).

La sensibilité de la mesure pour une valeur $\Delta\Phi$ donnée est exprimée par la dérivée de la fonction Ps:

$$\frac{dP_s}{d(\Delta\Phi)} = 2\sqrt{P_{1s}P_{2s}} \sin(\Delta\Phi) . \tag{5}$$

On voit que la sensibilité de l'interféromètre est très faible si la différence de phase $\Delta\Phi$ est peu différente de zéro. C'est le cas dans un gyromètre si on désire mesurer de faibles vitesses de rotation $\Omega$.

La variation de la puissance optique dans la branche de sortie 2 en fonction de $\Delta\Phi$ est illustrée par le diagramme de la figure 2.

On peut considérer que les termes $P_{1s}$ et $P_{2s}$ sont égaux. Il s'en suit que pour une différence de phase $\Delta\Phi = 0$, la puissance détectée est nulle.

Elle passe par un maximum $P_{smax}$ pour $\Delta\Phi = \pi$ et de nouveau par zéro pour $2\pi$ et ainsi de suite.

Pour augmenter la sensibilité de l'interféromètre, on peut introduire un »bias non-réciproque« constant dans la phase des deux ondes circulent en sens inverses de façon à déplacer le point de fonctionnement de l'interféromètre.

Dans le cas d'une fonction variant selon une fonction cosinusoïdale, le point de plus haute sensibilité est obtenu pour des angles de $(2k+1)\frac{\pi}{2}$, avec k nombre entier. On peut donc choisir und »bias« introduisant une variation de phase sur chaque onde en valeur absolue de $\pi/4$ mais de signe contraire.

En l'absence de perturbation »non-réciproque« la différence de phase $\Delta\Phi$ devient alors $\Delta\Phi' = \Delta\Phi + \Delta\Phi_0$ (6) avec $\Delta\Phi_0 = \frac{\pi}{2}$ .

On se place alors au point $P_{SO}$ sur la courbe de la figure 2.

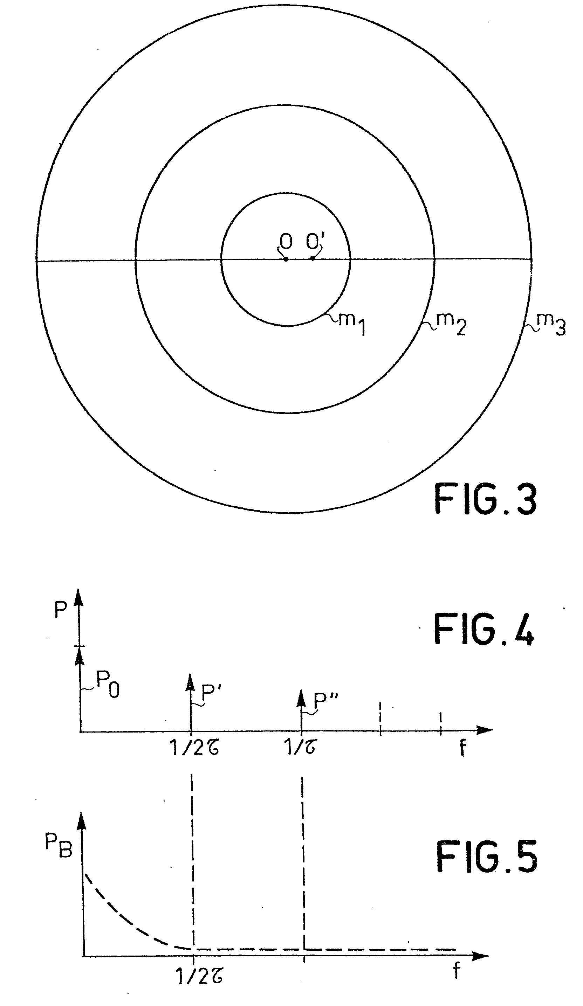

Un premier procédé selon l'art anterieur pour obtenir un tel »bias« est illustré par la figure 3.

On utilise des faisceaux de rayons légèrement divergents. Il s'en suit que, même en l'absence de perturbations »non-réciproques«, il y a apparition de franges d'interférence en anneau que l'on peut observer dans la branche de sortie 3. Sur l'axe optique 0 de cette branche on observe un minimum car la différence de phase des deux ondes recombinées reste égale à zéro. Si on s'éloigne de l'axe optique 0, on observe une série de maxima m1, m2, m3 etc . . ., correspondant à des variations de phase $\Delta\Phi$ de: $\pi, 2\pi, 3\pi$ etc. dues à la divergence. Si on se place en o' où la différence de phase est égale à $\pi/2$, on déplace en conséquence le point de fontionnement de l'interféromètre.

Un deuxième procédé de l'art connu, pouvant être mis en œuvre dans le cas d'un gyromètre, consiste à imprimer au gyromètre une vitesse initiale $\Omega_0$ correspondant à une différence de phase $\Delta\Phi_0$ de $\pi/2$, $\Delta\Phi_0$ étant donnée en fonction du $\Omega_0$ par la relation (3).

Bien que séduisant, ces procédés ne permettent pas cependant d'obtenir tout le gain en sensibilité escompté. En effet il est nécessaire d'assurer une valeur constante à la variation de phase $\Delta\Phi_0$ introduite artificiellement. La stabilité à atteindre est de l'ordre de grandeur de $10^{-5}$ radian par heure. Typiquement, dans le cas d'un gyromètre, la vitesse de rotation initiale $\Omega_0$ devrait être d'environ $10^{+3}$ radians par heure, ce avec la stabilité précitée pour obtenir la sensibilité maximale théorique, c'est-à-dire limitée par les seuls bruits quantiques. Il s'en suit que les procédés de l'art connu mettant en œuvre un dispositif introduisant un »biais non-réciproque« ne permettant par d'atteindre un heut degré de sensibilité.

Le procédé de l'invention permet de pallier ces inconvénients. Selon l'invention, on introduit sur le parcourt des ondes dans l'anneau 2, un modulateur de phase mettant en jeu un effet réciproque : élastooptique ou électro-optique par exemple. Ce modulateur est excité de façon à introduire une variation de phase de l'onde qui le traverse qui soit périodique, période qui doit être égale à une valeur $2\tau$, $\tau$ étant le temps de parcourt d'une onde dans l'anneau.

Du fait de la périodicité la relation suivante est vérifiée:

$$\Phi(t) = \Phi(t + 2\tau) . \qquad (7)$$

La condition de périodicité est bien sûr remplie pour toute fonction périodique dont la fréquence est un multiple entier k de la fréquence $\dfrac{1}{2\tau}$.

Chacune des dex ondes circulant en sens inverses subit également ce déphasage lorsqu'elle traverse le modulateur. Il s'en suit que la différence de phase ($\Delta\Phi$ est la différence de phase en l'absence de ce déphaseur) devient:

$$\Delta\Phi' = \Delta\Phi + \Phi(t) - \Phi(t + \tau) . \qquad (8)$$

Si on appelle $\Psi(\tau)$ la fonction suivante:

$$\Psi(t) = \Phi(t) - \Phi(t + \tau) \qquad (9)$$

du fait de la périodicité de $\Phi(t)$, la fonction $\Psi(t)$ est symétrique, ce qui signifie que:

$$\Psi(t) = -\Psi(t + \tau) . \qquad (10)$$

Il en résulte que la puissance optique détectée dans chaque branche:

$$P = P_1 + P_2 \pm 2\sqrt{P_1 P_2}\,\mathrm{Cos}\,(\Delta\Phi + \Psi(t)) \qquad (11)$$

présente un spectre de frequences illustré par la figure 4 représentant les composantes de la puissance optique détectée en fonction de la fréquence.

Ce spectre se décompose en:

—  une composante continue $P_0$
—  une composante P' de fréquence $1/2\tau$ proportionnelle à sin ($\Delta\Phi$) ou composante utile
—  une composante P'' de fréquence $1/\tau$ proportionnelle à Cos ($\Delta\Phi$)
—  différentes composantes à des harmoniques d'ordres supérieures, harmonique dépendant de la forme exacte de la fonction $\Phi(t)$.

Cette dernière fonction, représentant la modulation de phase des ondes circulant en sens inverses dans l'anneau 2, peut être quelconque quant à sa forme. Toutefois des fonctions telles que celles représentant des signaux carrés ou sinusoïdaux par exemple peuvent présenter certains avantages. Ces avantages peuvent être de plusieurs ordres: facilité de génération de ces fonctions, décomposition en harmoniques selon un spectre connu ou facilité de se synchroniser sur ces signaux.

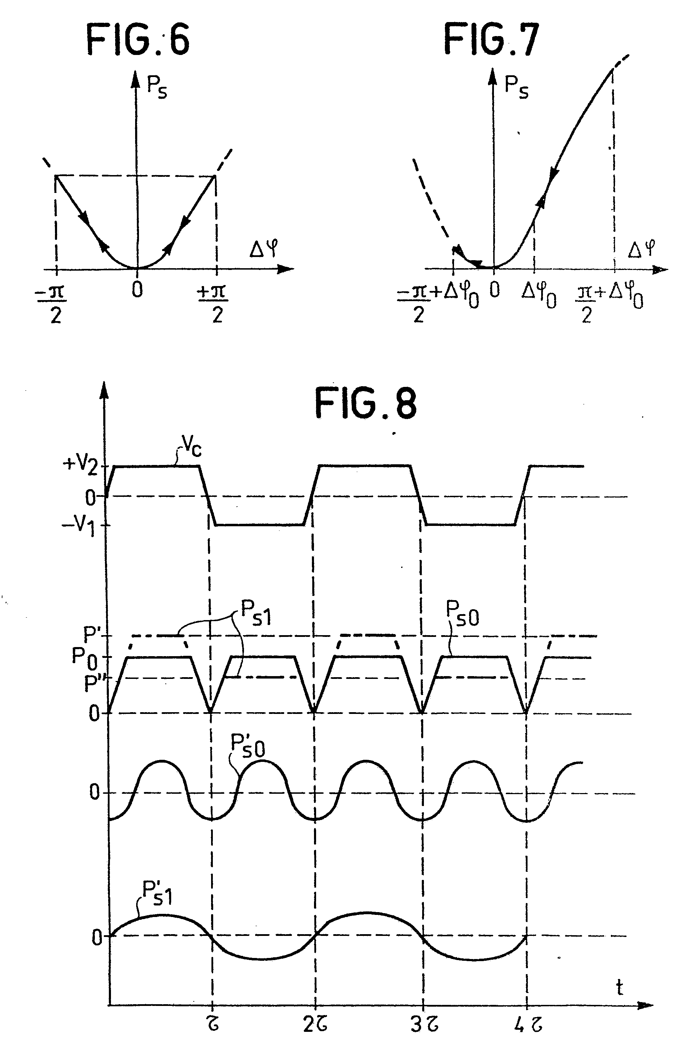

Si on revient à l'exemple du gyromètre, les figures 6 et 7 représentent l'effet d'une modulation de phase par une fonction symétrique $\Phi(\tau)$. Le point de fonctionnement décrit la courbe $P = f(\Delta\Phi)$ de la figure 2 de façon symétrique entre un couple de points extrêmes: le premier couple, sur la figure 6 représente le cas ou la vitesse de rotation à mesurer est nulle, se réduit aux deux valeurs $-\dfrac{\pi}{2}$, $+\dfrac{\pi}{2}$ ; le second couple, sur la fig 7 représentant le cas où la vitesse à mesurer n'est plus nulle et se traduit par une valeur $\Delta\Phi_0$ de ia différence de phase, est représenté par les valeurs

$$\left(-\frac{\pi}{2} + \Delta\Phi_0\right)$$

et

$$\left(+\frac{\pi}{2} + \Delta\Phi_0\right) .$$

Si, à titre d'exemple non limitatif, le signal de commande du modulateur de phase est un signal essentiellement rectangulaire (aux temps de montée prés) comme illustré par la courbe Vc, variant entre les valeurs $+V2$, $-V1$ du diagramme en temps t de la figure 8, selon que l'on se place dans le cas de la figure 6 ou celui de la figure 7, les signaux de puissance détecté par un détecteur de type quadratique sont illustrés respectivement par les courbes $Ps_0$ et $Ps_1$. En dehors des intervalles dues aux temps de montée, la courbe $Ps_0$ à une valeur constante $P_0$. Si on extrait le premier harmonique on obtient une courbe sinusoïdale $P'_{so}$ de fréquence $(1/\tau)$. Par contre, en présence d'une perturbation nonréciproque, c'est-à-dire pour une différence de phase $\Delta\Phi_0 \neq 0$ (vitesse de rotation $\Omega_0$ non nulle), la fonction $P_{s1}$ varie entre deux maxima: $P'$ et $P''$. Si on en extrait le premier harmonique $P'_{s1}$ on obtient une fonction sinusoïdale de fréquence $1/2\tau$. L'amplitude de ces signaux est proportionnelle à l'amplitude de la grandeur à mesurer et leur phase par rapport aux signaux de commande indique le sens de rotation.

De ces observations on constate que le procédé selon l'invention, outre l'avantage fondamental de pouvoir éviter un »biais non-réciproque« comportant les difficultés qui ont été évoquées, présente de nombreux avantages détaillés ci-dessous.

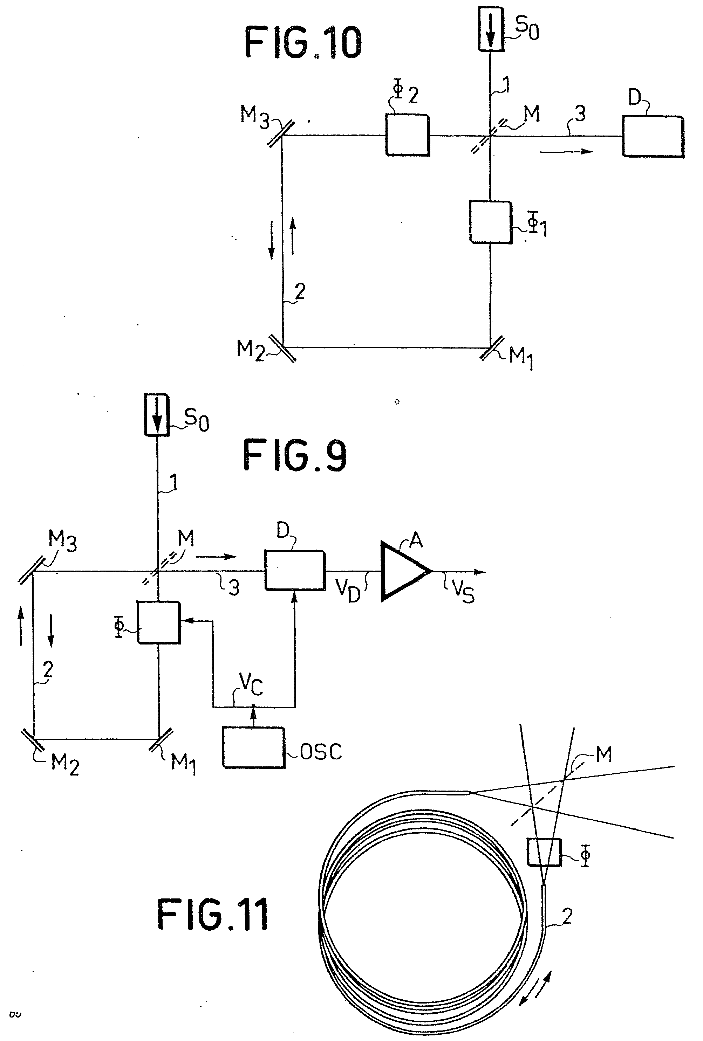

On va effectuer une détection synchrone en transmettant également aux moyens de détection, qui seront décrits ultérieurement en relation avec les figures 9, 10 et 11, les signaux de commande $V_c$. Une fréquence très stable de ces signaux peut être obtenue en utilisant un oscillateur piloté par un quartz, thermostaté en température. Ces dispositifs sont bien connus de l'homme de métier et ne représentent pas de difficultés particulières. Le signal de commande $V_c$ est à la fréquence $1/2\tau$ ou a un multiple entier k de cette fréquence. Dans ce qui suit seul le cas où $k = 1$ sera illustré à titre d'exemple non limitatif. Le signal détecté à cette fréquence est proportionnel à $\sin(\Delta\Phi)$. La sensibilité de l'interféromètre est donc maximale autour de la différence phase $(\Delta\Phi) = 0$. Une variation ou dérive de la forme ou de l'amplitude du signal $V_c$, c'est-à-dire corrélativement de la fonction $\Phi(t)$ résultante, n'affecte que le »facteur d'échelle« de la mesure. L'observation des variations lentes de la grandeur »non-réciproque« faisant l'objet de la mesure n'est plus alors limitée que par le bruit apporté par la chaine de détection et d'amplification du dispositif mettant en œuvre le procédé de l'invention.

D'autre part, comme illustré par la figure 4, le signal mesuré ayant une fréquence $1/2\tau$, on s'abstrait en grande partie des problèmes de détection à très basse fréquence et en particulier du bruit dont l'amplitude varie proportionalement à l'inverse de la fréquence comme illustré par la figure 5. La courbe du bruit $P_B$ en fonction de la fréquence est illustrée par la figure 5, mettant en évidence cet avantage supplémentaire de l'invention. Comme en pratique dans un interféromètre en anneau les pertes sont faibles et les puissances optiques mises en jeu relativement élevées, le bruit quantique de la lumière (bruit photonique domine les autres sources de bruits et notamment le bruit du à la chaîne de détection. Il s'en suit que le but visé par l'invention est atteint, on se rapproche de la sensibilité limite pouvant être atteinte. On peut noter également que le procédé, de l'invention, bien que très différent des méthodes de détection hétérodyne utilisées dans l'art connu, en présente aussi les avantages tout en permettant un gain en sensibilité non atteint par ces methodes.

On va maintenant décrire plus en détail trois variantes de dispositifs interféromètres mettant en œuvre le procédé de l'invention. Les éléments communs avec ceux de la figure 1 ne seront plus décrits.

La première variante est illustrée par la figure 9. Ce dispositif met en œuvre un modulateur $\Delta$ à effet réciproque. Ce modulateur reçoit sur une de ces entrées le signal $V_c$ de fréquence $1/2\tau$ élaboré par un générateur OSC comprenant un oscillateur de grande stabilité piloté par un quartz. Le signal est également transmis à un détecteur synchrone D. Ce détecteur est du type quadratique et a pour rôle de détecter la composante de la puissance optique proportionnelle à $\sin(\Delta\Phi)$, c'est-à-dire la composante de fréquence $1/2\tau$ et seulement la composante de cette fréquence. L'élément actif ou capteur optoélectrique peut être constitué par une photo- diode ou un tube photomultiplicateur. De tels détecteurs sont bien connus et ne nécessitent pas une plus ample description. Les signaux de sortie $V_D$ de ce détecteur sont transmis à un circuit d'élaboration de signaux symbolisé par un amplificateur A. Son rôle est multiple. Il doir les amplifier et les adapter à une utilisation ultérieure par des circuits non représentés. Les signaux de sortie Vs peuvent être du type représentés sur le diagramme de la figure 8 par les signaux $P'_{s1}$ proportionnels à l'amplitude de la composante contenant le terme »$\sin(\Delta\Phi)$«.

On peut également disposer dans une seconde variante deux modulateurs $\Phi_1$ et $\Phi_2$ de phase, à effet réciproque un a chaque extrémité de l'anneau 2 de l'interféromètre, comme illustré par la figure 10. Chaque modulateur $\Phi_1$ ou $\Phi_2$ introduit un déphasage périodique comme précédemment, à la fréquence $1/2\tau$, mais de telle sorte que l'on ait la relation:

$$\Phi_1(t) = -\Phi_2(t) \tag{12}$$

$\Phi_1(t)$ étant le déphasage apporté par le modulateur $\Phi_1$ et $\Phi_2(t)$ le déphasage apporté par le modulateur $\Phi_2$. Si la relation (12) est substantiellement verifiée quelquesoit t, on obtient par cette disposition particulière un gain supplémentaire en stabilité dù à la symétrie.

Bien que conforme à l'invention les dispositifs qui viennent d'être décrits en relation avec les figures 9 et 10, peuvent présenter certaines difficultés de réalisation. Il est notamment difficile d'obtenir un long chemin optique, c'est-à-dire un temps de transit $\tau$ assez long. Des procédés ont été proposés permettant d'allonger ce chemin optique. C'est notamment le cas du procédé décrit dans la demande de brevet français N° 75 26 520, publiée sous le numéro 22 83 424. Ce procédé consiste à faire parcourir au faisceau laser plusieurs fois l'anneau 2, ce en décalant angulairement des miroirs de renvoi analogues à ceux (M, $M_1$, à $M_3$) des figures 1, 9 ou 10.

Cependant les progrès réalisés dans l'obtention de fibres optiques à faible pertes autorisent l'utilisation de ces fibres optiques pour réaliser des interféromètres en anneaux dont le chemin optique 2 est très long. En effet, à titre d'exemple une fibre optique enroulée mille fois autour d'un cylindre de 15 cm de rayon a une longueur de 900 m. Si la fibre a une aténuation de 2 db/Km, une proportion de 60% de la lumière transmise est retenue dans la fibre. D'autre part ces fibres permettent également une miniaturisation plus grande des éléments électrooptiques et notamment des modulateurs de phase périodiques par intégration de ces éléments. Un exemple de réalisation d'un interféromètre en anneau conforme à l'invention et utilisant une fibre optique est illustré par la figure 11. La fibre 2 enroulée sur elle-même forme l'anneau de l'interféromètre. Le modulateur périodique $\Phi$ est placé à une des extrémités de la fibre 2.

De façon plus précise, les modulateurs périodiques mis en œuvre dans l'invention peuvent mettre en profit différents effets électrooptiques connus, tels que l'effet Pokels ou l'effet kerr, ce à titre d'exemples, non limitatifs.

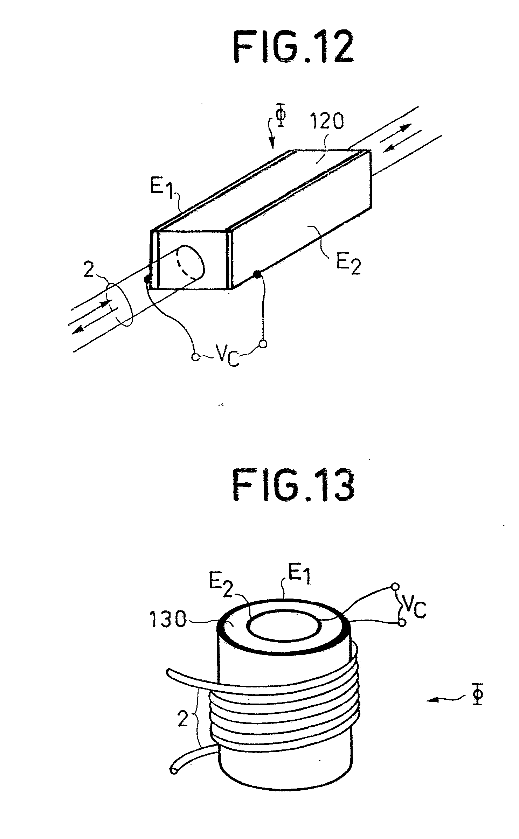

Un premier exemple de modulateur de phase $\Phi$ est illustré par la figure 12. Il s'agit d'un barreau 120 parallèlipipédique en cristal susceptible de présenter un effet électrooptique linéaire, dit effet Pockels. Deux électrodes $E_1$ et $E_2$ constituées par une pellicule de métal déposé sur deux faces opposées reçoivent le signal de commande $V_c$ de fréquence $1/2\tau$. Le faisceau laser dans l'anneau 2 est modulé symétriquement en phase, ce à la fréquence $1/2\tau$.

Sur la figure 12, il s'agit de l'effet longitudinal, l'effet transversal qui serait obtenu en plaçant les électrodes sur les faces d'entrée ou sortie du faisceau laser 2 est également utilisable. Il faut alors qu'à la longueur d'onde du laser utilisé ces électrodes soient très peu absorbantes de l'énergie radiante circulant dans l'anneau. On peut réaliser ces électrodes par un dépôt de très faible épaisseur de métal. Le matériau utilisable pour le barreau peut être, à titre d'exemple non limitatif, du KDP, de l'ADP ou des Niobates comme le Niobate de Lithium.

Un deuxième exemple de modulateur de phase $\Phi$ destiné plus particulièrement aux interféromètres à fibres optique est illustré par la figure 13. Ce modulateur est constitué par un cylindre 130 creux en matériau piezo-électrique excité par deux électrodes $E_1 - E_2$, déposées respectivement sur les faces externe et interne du cylindre 130, et recevant le signal de commande $V_c$ à la fréquence $1/2\tau$. On a enroulé en spires serrées l'une des extrémités de la fibre constituant l'anneau 2 de l'interféromètre. Les déformations du matériau piézo-électrique induites par le signal périodique $V_c$ sont transmise à la fibre optique et ont pour conséquence de moduler périodiquement la phase des ondes circulant en sens inverses dans la fibre.

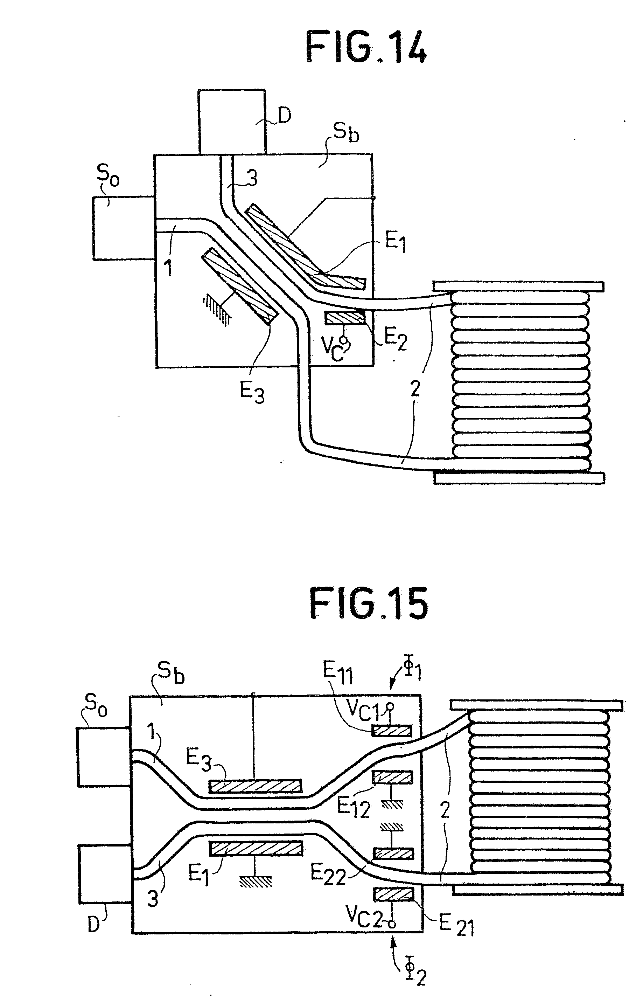

Un troisième exemple de modulateur de phase $\Phi$ particulièrement intéressant pour un interféromètre à fibre et permettant une intégration poussée est illustré par la figure 14. Il s'agit en fait d'un mode de réalisation analogue à celui décrit par la figure 2 de la demande de brevet francaise N° 77 35 039 et publiée sous le N° 2 409 518, relative à un gyromètre interférométrique à laser. Ce gyromètre comporte une source laser $S_0$; cette source peut être un laser à gaz, hélium-Néon par exemple, un laser à semiconducteur GaAs, ou tout autre laser solide. De préférence le laser choisi a une longueur d'onde correspondant à un minimum d'absorption pour les fibres optiques, c'est-à-dire une longueur d'onde autour de 0,85 µm ou autour de 1,2 µm. La face émissive de cette source $S_0$ est couplée sur un substrat Sb. Le circuit optique intégré sur ce substrat comporte dans ce mode de réalisation un coupleur directionnel commandé par deux électrodes $E_1$ et $E_3$ entre lesquelles un champ électrique peut être appliqué.

Ce coupleur directionnel est formé du guide d'onde 1 et du guide d'onde 3 parallèle sur une partie de leurs trajets à une distance prédéterminée. Lorsqu'un champ électrique est appliqué entre les électrodes, l'indice du matériau électro-optique varie et la commande par le champ électrique permet de transférer totalement ou partiellement l'énergie radiante guidée par un guide à l'autre guide. L'autre extrémité du guide 1-et une extrémité du guide 3 sont couplées aux deux extrémités d'une fibre optique enroulée 2, la seconde extrémité du guide 3 étant couplée à la face réceptrice d'un détecteur de lumière D. Un tel dispositif fonctionne de la manière suivante: Le coupleur est utilisé en séparateur de radiation et en mélangeur. Un signal de commande nun représenté permet l'émission de lumière par le laser. Le champ appliqué entre les électrodes $E_1 - E_3$ du coupleur est tel que la moitié de l'énergie radiante est transférée du guide 1 au guide 3. Les deux extrémités de la fibre 2 reçoivent donc la moitié de l'énergie et la fibre est parcourue par des ondes (simultanément dans les deux sens). Le couplage entre les deux guides est tel que les deux ondes de retour interfèrent. Le détecteur D placé à l'extrémité du guide 3 reçoit donc un signal $P_s$ fonction de la vitesse de rotation du gyromètre. Un tel dispositif fonctionne en continu mais il est possible de le faire fonctionner en impulsions, le laser n'émettant que pendant une durée inférieure au temps de propagation dans la fibre. La détection est alors faite en impulsions.

L'électrode $E_1$ est prolongée pour être mise en vis-à-vis d'une électrode supplémentaire $E_2$. Le signal

de commande $V_c$ précédemment décrit est appliquée entre ces électrodes. Le champ résultant module la phase 2 des ondes circulant en sens inverse dans l'extrémité de la fibre 2 pour réaliser le modulateur de phase $\Phi$ de la figure 11. On peut également utiliser deux jeux séparés d'électrodes en scindant l'électrode $E_1$. Le matériau constituant le substrat est un matériau choisi parmi ceux déjà cités en relation avec la figure 12, à condition que l'on puisse réaliser en son sein les guides d'ondes 1 et 3: à titre d'exemple, le Niobate de Lithium dans lequel on a fait diffuser des ions métalliques par exemple du Titane. Le couple Tantalate de Lithium-Niobium peut également être utilisé. On peut enfin utiliser d'autres matériaux tels que l'Arséniure de Gallium dans lequel on réalise les guides d'ondes 1 et 3 par implantation ionique ou protonique.

Comme dans le cas du dispositif de la figure 10, on peut mettre en œuvre deux modulateurs de phase. La figure 15 illustre une telle disposition. Selon cette disposition, le modulateur séparateur-mélangeur comprenant les électrodes $E_1 - E_3$ est entièrement distinct des modulateurs de phase $\Phi_1$ et $\Phi_2$ comprenant respectivement les couples d'électrodes $E_{11}-E_{12}$ et $E_{21}-E_{22}$. Ces modulateurs reçoivent des signaux de commande $V_{C1}$ et $V_{C2}$ de telle manière que la relation (12) soit vérifiée.

Pour fixer les idées, on peut indiquer que le temps de propagation de la lumière dans une fibre optique est de l'ordre de: 5 μs/Km, soit pour $2\tau$ : 10 μs/Km.

Si la fibre a une longueur de 1 Km, la fréquence du signal de commande doit être de 100 KHz, ce qui est compatible avec le temps de réponse des modulateurs de phase utilisés. En optique intégrée avec un modulateur de phase tel que celui de la figure 14, on peut fonctionner avec des fréquences de l'ordre de 10 MHz.

Le procédé de l'invention a été expérimenté sur un gyromètre interférométrique en anneau dont la fibre optique avait une longueur de 1 Km. On a obtenu une sensibilité de l'ordre de $10^{-5}$ rd/$\sqrt{Hz}$ ce qui n'est éloigné que d'un ordre de grandeur 10 de la sensibilité maximale que l'on puisse espérer obtenir par le calcul. Ce résultat est à comparer avec la sensibilité des gyromètres interférométriques en anneau de l'art connu qui est environ $10^6$ fois moindre que cette sensibilité ultime.

L'invention n'est pas limitée aux exemples de réalisation qui viennent d'être décrits, à titre d'illustration. Les ondes lumineuses peuvent être remplacées plus généralement par des ondes électromagnétiques. Les modalités de réalisation pratique, notamment des modulateurs de phases, doivent alors être adaptés aux caractéristiques spécifiques des ondes mises en jeu.

## Revendications

1. Procédé de mesure de la différence de phase des ondes électromagnétiques circulant en sens inverses dans un interféromètre en anneau, comprenant les étapes de génération d'une onde électromagnétique, de séparation de cette onde électromagnétique en deux composante en phase et d'injection de ces composantes aux extrémités de l'anneau pour former lesdites deux ondes circulant en sens inverses, de modulation périodique et réciproque de la phase de ces deux ondes, de recombinaison de ces deux ondes aux extrémités de l'anneau et de détection des deux ondes recombinées; caractérisé en ce que l'étape de modulation est réalisée en modulant ladite phase des deux ondes circulant en sens inverses, au moins à l'une des extrémités de l'anneau, selon une fonction vérifiant la relation $\Phi(t)=\Phi(t+2\tau)$, dans laquelle $\tau$ est le temps que met chacune des ondes pour parcourir le chemin optique défini par l'anneau, et en ce que l'étape de détection de la différence de phase entre les ondes recombinées est réalisée en mesurant, à la fréquence $(1/2\tau)$ ou a un multiple entier (k) de cette fréquence, la puissance optique de la composante des ondes recombinées proportionnelles au sinus de la différence de phase entre ces ondes.

2. Procédé selon la revendication 1, caractérisé en ce que les ondes circulant en sens inverses dans l'anneau sont modulées en phase une première fois selon une première fonction $\Phi_1(t)$ périodique, à une première extrémité de l'anneau, et une seconde fois selon une seconde fonction $\Phi_2(t)$ périodique, à une seconde extrémité de l'anneau, et en ce que les deux fonctions $\Phi_1(t)$ et $\Phi_2(t)$ vérifient simultanément les trois relations:

$$\Phi_1(t) = -\Phi_2(t)$$
$$\Phi_1(t) = \Phi_1(t+2\tau)$$
$$\Phi_2(t) = \Phi_2(t+2\tau)$$

3. Procédé selon l'une quelconque des revendications 1 ou 2, caractérisé en ce que les fonctions périodiques modulant la phase des ondes représentent des signaux en créneaux dont l'amplitude varie entre deux états déterminés ($+V2$, $-V1$) et de fréquence $1/2\tau$. ou un multiple entier (k) de cette fréquence.

4. Procédé selon l'une quelconque des revendications 1 ou 2 caractérisé en ce que les fonctions périodiques modulant la phase des ondes représentent des signaux sinusoidaux ou cosinusoïdaux de fréquence $1/2\tau$ ou un multiple entier (k) de cette fréquence.

5. Procédé selon l'une quelconque des revendications 1 à 4 caractérisé en ce que l'amplitude des variations des fonctions périodiques est telle que la variation de la différence de phase périodique entre les deux ondes circulant en sens inverses est de $\frac{\pi}{2}$ radians.

6. Dispositif de mesure de la différence de phase des ondes circulant dans un interféromètre en anneau (2) selon le procédé de l'une quelconque des revendications 1 à 5; caractérisé en ce qu'il comprend, les ondes étant des ondes lumineuses, au moins en modulateur de phase ($\Phi$) à effet réciproque disposé à l'une des extrémités de l'anneau, des moyens de génération (OSC) d'un signal périodique de commande ($V_c$) de fréquence ($1/2\tau$) et des moyens de détection (D), à la fréquence ($1/2\tau$) ou a un multiple entier (k) de cette fréquence, de la puissance optique de la composante des ondes recombinées proportionnelle au sinus de la différence de phase entre ces ondes.

7. Dispositif selon la revendication 6, caractérisé en ce qu'il comprend deux modulateurs de phases ($\Phi_1$, $\Phi_2$) à effet réciproque placés chacun à l'une des extrémités de l'anneau, introduisant des déphasages selon les deux fonctions périodiques $\Phi_1$ (t) et $\Phi_2$ (t).

8. Dispositif selon l'une quelconque des revendications 6 ou 7 caractérisé en ce que les modulateurs de phase ($\Phi$, $\Phi_1$, $\Phi_2$) à effet réciproque mettent en jeu un effet électrooptique.

9. Dispositif selon la revendication 8, caractérisé en ce que l'effet électro-optique est un effet linéaire et en ce que chaque modulateur de phase est constitué par une cellule de Pockels.

10. Dispositif selon la revendication 8, caractérisé en ce que l'effet électro-optique est un effet quadratique et en ce que chaque modulateur de phase est constitué par une cellule de Kerr.

11. Dispositif selon l'une quelconque des revendications 6 ou 7, caractérisé en ce que, l'anneau (2) de l'interféromètre étant formé par une fibre optique, chaque modulateur met en jeu un effet mécano-optique et en ce que ce modulateur est constitué par un corps allongé et creux (120) en matériau piézo-électrique muni d'électrodes ($E_1$, $E_2$) placées respectivement sur les faces principales internes et externes, corps sur lequel est enroulé à spires jointives une fibre optique (2) sur une longueur déterminée; le corps piézo-électrique, excité par le signal de commande ($V_c$), vibrant à la fréquence de ce signal ($1/2\tau$) et introduisant des variations de phase des ondes circulant dans cette fibre.

12. Dispositif selon l'une quelconque des revendications 6 ou 7 pour un interféromètre dont l'anneau (2) est formé par une fibre optique et la source d'énergie ($S_0$), les moyens de séparation et de mélange des ondes ($E_1$, $E_3$) et les moyens de détection (D) sont entièrement réalisés en milieu solide par intégration sur un substrat ($S_b$), sur lequel ont été réalisés deux guides d'ondes (1, 3) couplés et reliés en une de leur extrémité, respectivement à la source d'énergie ($S_0$) et aux moyens de détection (D) et en leurs autres extrémités aux extrémités de la fibre optique; dispositif caractérisé en ce qu'il comporte, intégrée sur le substrat ($S_b$) au moins une paire d'électrodes ($E_1$, $E_2$) disposées de part et d'autre de l'un des deux guides d'ondes (1, 3) pour former un modulateur de phase ($\Phi$) à effet électrooptique; les électrodes recevant le signal périodique de commande ($V_c$).

13. Dispositif selon la revendication 12, caractérisé en ce qu'il comporte deux paires d'électrodes ($E_{11} - E_{12}$, $E_{21} - E_{22}$), intégrées sur le substrat ($S_b$) disposées de part et d'autre respectivement de chaque guide d'ondes (1, 3) pour former deux modulateurs de phase ($\Phi_1$, $\Phi_2$).

14. Dispositif selon l'une quelconque des revendications 12 ou 13 caractérisé en ce que le substrat ($S_b$) est choisi parmi les matériaux suivants: Niobate de Lithium ou Tantalate de Lithium dans lesquels on a fait diffuser pour réaliser les guides d'ondes du Titane, respectivement du Niobium.

15. Dispositif selon l'une quelconque des revendications 12 ou 13 caractérisé en ce que le substrat ($S_b$) est en Arséniure de Gallium dans lequel les guides d'ondes ont été réalisés par implantation ionique ou protonique.

16. Dispositif selon l'une quelconque des revendications 6 à 15, caractérisé en ce que les moyens détecteurs sont quadratiques et comprennent un détecteur synchrone (D) synchronisé sur la fréquence du signal de commande ($V_c$) et en ce que ce signal de commande transmis simultanément au détecteur synchrone (D) et à chaque modulateur de phase ($\Phi$) est élaboré par un oscillateur local (OSC).

## Patentansprüche

1. Verfahren zum Messen der Phasendifferenz elektromagnetischer Wellen die gegensinnig in einem Ringinterferometer umlaufen, wobei bei diesem Verfahren eine elektromagnetische Welle erzeugt wird, diese elektromagnetische Welle in zwei Phasenkomponenten aufgeteilt wird, die an den Enden des Rings eingespeist werden, damit die zwei gegensinnig umlaufenden Wellen erzeugt werden, die Phase der zwei Wellen periodisch und reziprok moduliert wird, die zwei Wellen an den Enden des Rings zusammengeführt werden und die zusammengeführten Wellen dann erfaßt werden, dadurch gekennzeichnet, daß bei dem Modulationsvorgang die Phase der zwei gegensinnig umlaufenden Wellen wenigstens an einem Ende des Rings gemäß einer die Beziehung $\Phi(t) = \Phi(t + 2\tau)$ erfüllenden Funktion moduliert wird, wobei $\tau$ die Zeit ist, die jede der Wellen für das Durchlaufen des von dem Ring gebildeten optischen Wegs benötigt, und daß die Feststellung der Phasendifferenz zwischen den zwei zusammengeführten Wellen dadurch erfolgt, daß bei der Frequenz ($1/2\tau$) oder bei

einer ganzzahligen Vielfachen (k) dieser Frequenz die optische Leistung der dem Sinus der Phasendifferenz zwischen den Wellen proportionalen Komponente der zusammengeführten Wellen gemessen wird.

2. Verfahren nach Anspruch 1, dadurch gekennzeichnet, daß die gegensinnig in dem Ring umlaufenden Wellen an einem ersten Ende des Rings ein erstes Mal gemäß einer ersten periodischen Funktion $\Phi_1(t)$ phasenmoduliert und an einem zweiten Ende des Rings ein zweites Mal gemäß einer zweiten periodischen Funktion $\Phi_2(t)$ phasenmoduliert werden und daß die zwei Funktionen $\Phi_1(t)$ und $\Phi_2(t)$ gleichzeitig die drei Beziehungen erfüllen:

$$\Phi_1(t) = -\Phi_2(t)$$
$$\Phi_1(t) = \Phi_1(t+2\tau)$$
$$\Phi_2(t) = \Phi_2(t+2\tau)$$

3. Verfahren nach Anspruch 1 oder 2, dadurch gekennzeichnet, daß die die Phase der Wellen modulierenden periodischen Funktionen Rechtecksignale sind, deren Amplitude zwischen zwei vorbestimmten Werten (+V2, −V1) schwankt und deren Frequenz $1/2\tau$ oder ein ganzzahliges Vielfaches (k) dieser Frequenz beträgt.

4. Verfahren nach Anspruch 1 oder 2, dadurch gekennzeichnet, daß die die Phase der Wellen modulierenden periodischen Funktionen sinusförmige oder cosinusförmige Signale mit der Frequenz $1/2\tau$ oder einem ganzzahligen Vielfachen (k) diese Frequenz repräsentieren.

5. Verfahren nach einem der Ansprüche 1 bis 4, dadurch gekennzeichnet, daß die Amplitude der Änderungen der periodischen Funktionen derart ist, daß die Änderung der periodischen Phasendifferenz zwischen den zwei gegensinnig umlaufenden Wellen $\pi/2$ Radian beträgt.

6. Anordnung zum Messen der Phasendifferenz von zwei in einem Ringinterferometer (2) umlaufenden Wellen unter Anwendung des Verfahrens nach einem der Ansprüche 1 bis 5, dadurch gekennzeichnet, daß dann, wenn die Wellen Lichtwellen sind, wenigstens ein reziprok arbeitender Phasenmodulator ($\Phi$) an einem Ende des Rings angeordnet ist, daß Generatorvorrichtung (OSC) für ein periodisches Steuersignal (V$_C$) mit der Frequenz $(1/2\tau)$ vorgesehen sind und daß ferner Detektionsvorrichtungen (D) vorgesehen sind, die bei der Frequenz $(1/2\tau)$ oder einem ganzzahligen Vielfachen (k) dieser Frequenz die optische Leistung der dem Sinus der Phasendifferenz zwischen den zwei Wellen proportionalen Komponente der zusammengeführten Wellen feststellen.

7. Anordnung nach Anspruch 6, gekennzeichnet durch zwei reziprok wirkende Phasenmodulatoren ($\Phi_1$, $\Phi_2$), von denen jeweils einer an einem der Enden des Rings angeordnet ist, wobei diese Phasenmodulatoren Phasenverschiebungen gemäß den zwei periodischen Funktionen $\Phi_1(t)$ und $\Phi_2(t)$ einführen.

8. Anordnung nach Anspruch 6 oder 7, dadurch gekennzeichnet, daß die reziprok wirkenden Phasenmodulatoren ($\Phi$, $\Phi_1$, $\Phi_2$) einen elektrooptischen Effekt zur Anwendung bringen.

9. Anordnung nach Anspruch 8, dadurch gekennzeichnet, daß der elektrooptische Effekt ein linearer Effekt ist und daß jeder Phasenmodulator von einer Pockels-Zelle gebildet ist.

10. Anordnung nach Anspruch 8, dadurch gekennzeichnet, daß der elektrooptische Effekt ein quadratischer Effekt ist und daß jeder Phasenmodulator von einer Kerr-Zelle gebildet ist.

11. Anordnung nach Anspruch 6 oder 7, dadurch gekennzeichnet, daß der Ring (2) des Interferrometers von einer Glasfaser gebildet ist, daß jeder Modulator einen mechanooptischen Effekt zur Anwendung bringt, daß jeder Modulator von einem länglichen, hohlen Körper (120) aus piezoelektrischem Material gebildet ist, der mit Elektroden (E$_1$, E$_2$) versehen ist, die an den internen und externen Hauptflächen angebracht sind, daß der Körper mit dicht aneinanderliegenden Windungen einer optischen Faser (2) über ein vorbestimmtes Längenstück umwickelt ist, und daß der piezoelektrische Körper, der durch das Steuersignal (V$_C$) angeregt ist, mit der Frequenz $(1/2\tau)$ dieses Signals schwingt und Phasenänderungen der in dieser optischen Faser zirkulierenden Wellen hervorruft.

12. Anordnung nach Anspruch 6 oder 7 für ein Interferrometer, dessen Ring (2) von einer optischen Faser gebildet ist und bei dem die Energiequelle (S$_0$), die Trenn- und Mischvorrichtungen (E$_1$, E$_3$) für die Wellen und die Detektionsvorrichtungen (D) vollständig aus einem festen Medium durch Integration auf einem Substrat (S$_b$) gebildet sind, auf dem zwei Wellenleiter (1, 3) angebracht sind, die an einem ihrer Enden mit der Energiequelle (S$_0$) und mit den Detektionsvorrichtungen (D) gekoppelt und verbunden sind und an ihrem anderen Ende mit den Enden der optischen Faser gekoppelt und verbunden sind, dadurch gekennzeichnet, daß auf dem Substrat (S$_b$) integriert wenigstens zwei Elektroden (E$_1$, E$_2$) beiderseits eines der zwei Wellenleiter (1, 3) zur Bildung eines phasenmodulators ($\Phi$) mit elektrooptischem Effekt angebracht sind, wobei die Elektroden das periodische Steuersignal (V$_C$) empfangen.

13. Anordnung nach Anspruch 12, dadurch gekennzeichnet, daß auf dem Substrat (S$_b$) integriert zwei Elektroden (E$_{11}$−E$_{12}$, E$_{21}$−E$_{22}$) beiderseits jedes Wellenleiters (1, 3) zur Bildung von zwei Phasenmodulatoren ($\Phi_1$, $\Phi_2$) angebracht sind.

14. Anordnung nach Anspruch 12 oder 13, dadurch gekennzeichnet, daß das Substrat (S$_b$) aus Lithiumniobat oder Lithiumtantalat gebildet ist, in das zur Verwirklichung von Wellenleitern Titan bzw.

Niob eindiffundiert ist.

15. Anordnung nach Anspruch 12 oder 13, dadurch gekennzeichnet, daß das Substrat ($S_b$) aus Galliumarsenid besteht, in dem die Wellenleiter durch Ionenimplantation oder Protonenimplantation gebildet sind.

16. Anordnung nach einem der Ansprüche 6 bis 15, dadurch gekennzeichnet, daß die Detektionsvorrichtungen quadratisch arbeiten und einen Synchrondetektor (D) enthalten, der mit der Frequenz des Steuersignals ($V_C$) synchronisiert ist, und daß das Steuersignal, das gleichzeitig an den Synchrondetektor (D) und an jeden Phasenmodulator ($\Phi$) angelegt wird, von einem Überlagerungsoszillator (OSC) erzeugt wird.

## Claims

1. A method of measuring the phase difference of electromagnetic waves circulating in opposite sense in a ring interferometer, comprising the step of generating an electromagnetic wave, separating this electromagnetic wave into two phase components which are fed into the end of the ring in order to generate the two waves circulating in opposite sense, modulating the phases of the two waves in preiodical and reciprocal manner, recombining the two waves at the ends of the ring and detecting the recombined waves, characterized in that in the modulating step the phases of the two waves circulating in opposite sense are modulated at least at one end of the ring according to a function satisfying the relation $\Phi(t) = \Phi(t+2\tau)$, wherein $\tau$ is the time necessary for each wave for passing through the optical way provided by the ring, and that the step of detecting the phase difference between the two recombined waves is carried out by measuring, at the frequency $(1/2\tau)$ or at an entire multiple (k) of this frequency the optical power of the component of the recombined waves proportional to the sine of the phase difference between the waves.

2. Method according to claim 1, characterized in that the waves circulating in opposite sense in the ring are for a first time at a first end of the ring phase modulated according to a first periodical function $\Phi_1(t)$ and for a second time at a second end of the ring phase modulated according to a second periodical function $\Phi_2(t)$, and that the two functions $\Phi_1(t)$ and $\Phi_2(t)$ simultaneously satisfy the following three relations:

$$\Phi_1(t) = -\Phi_2(t)$$
$$\Phi_1(t) = \Phi_1(t+2\tau)$$
$$\Phi_2(t) = \Phi_2(t+2\tau)$$

3. Method according to claim 1 or 2, characterized in that the periodical functions modulating the phases of the waves are square wave signals having amplitudes varying between two predetermined values ($+V2, -V1$) and having the frequenc $1/2\tau$ or an entire multiple (k) of this frequency.

4. Method according to claim 1 or 2, characterized in that the periodical functions modulating the phases of the waves are sine or cosine signals having the frequency $1/2\tau$ or an entire multiple (k) of this frequency.

5. Method according to any one of claims 1 to 4, characterized in that the amplitude of the variations of the periodical functions is such that the variation of the periodical phase difference between the two waves circulating in opposite sense is $\pi/2$ radians.

6. Arrangement for measuring the phase difference of two waves circulating in a ring interferometer (2) by use of the method according to any one of claims 1 to 5, characterized in that in case the waves are light waves at least one reciprocally operating phase modulator ($\Phi$) is provided at one end of the ring, that generator means (OSC) for generating a periodical control signal ($V_C$) having the frequency $(1/2\tau)$ are provided and that detector means (D) are provided which, at the frequency $(1/2\tau)$ or an entire multiple (k) of this frequency, detect the optical power of the component of the recombined waves proportional to the sine of the phase difference between the two waves.

7. Arrangement according to claim 6, characterized by two reciprocally operating phase modulators ($\Phi_1$, $\Phi_2$), one being provided at each end of the ring, these phase modulators causing phase shifts according to the two periodical functions $\Phi_1(t)$ and $\Phi_2(t)$.

8. Arrangement according to claim 6 or 7, characterized in that the reciprocally operating phase modulators ($\Phi$, $\Phi_1$, $\Phi_2$) put in action an electrooptical effect.

9. Arrangement according to claim 8, characterized in that the electrooptical effect is a linear effect ant that each phase modulator is a Pockels cell.

10. Arrangement according to claim 8, characterized in that the electrooptical effect is a square law effect and that each phase modulator is a Kerr cell.

11. Arrangement according to claim 6 or 7, characterized in that the ring (2) of the interferometer ist formed by a glass fiber, that each modulator puts into effect a mechanooptical effect, that each modulator is formed by a longish hollow body (120) of piezoelectric material carrying electrodes ($E_1$, $E_2$) disposed at the internal and external main surfaces, that the body is surrounded by adjoining windings of an optical fiber (2) extending over a predetermined length of the body, and that the piezoelectric body which is stimulated by the control signal ($V_C$) vibrates with the frequency ($1/2\tau$) of this signal and generates phase changes of the waves circulating within the optical fiber.

12. Arrangement according to claim 6 or 7 for an interferometer having a ring (2) provided by an optical fiber, the energy source ($S_0$), the separating and combining means ($E_1$, $E_3$) for the waves and the detector means (D) of said interferometer being completely formed of a solid medium by integration on a substrate ($S_b$) on which two waveguides (1, 3) are disposed the ends of which are connected and coupled at one end to the energy source ($S_0$) and to the detector means (D) and at their other end to the ends of the optical fiber, characterized in that on said substrate ($S_b$) at least two electrodes ($E_1$, $E_2$) are integrated on both sides of one of the two waveguides (1, 3) for providing a phase modulator ($\Phi$) operating with an electrooptical effect, the electrodes receiving the periodical control signal ($V_C$).

13. Arrangement according to claim 12, characterized in that on the substrate ($S_b$) two electrodes ($E_{11} - E_{12}$, $E_{21} - E_{22}$) are integrated on both sides of each waveguide (1, 3) for providing two phase modulators ($\Phi_1$, $\Phi_2$).

14. Arrangement according to claim 12 or 13, characterized in that the substrate ($S_b$) comprises lithium niobate or lithium tantalate into which for providing waveguides titanium or niobium is diffused.

15. Arrangement according to claim 12 or 13, characterized in that the substrate ($S_b$) comprises gallium arsenide in which the waveguides are provided by ion or proton implantation.

16. Arrangement according to any one of claims 6 to 15, characterized in that the detector means operate according to a square law function and contain a synchronous detector (D) synchronized with the frequency of the control signal ($V_C$) and that the control signal applied simultaneously to the synchronous detector (D) and to each phase modulator ($\Phi$) is generated by a local oscillator (OSC).

FIG.1

FIG. 2

FIG.3

FIG.4

FIG.5

FIG.6

FIG.7

FIG.8

# FIG.10

$S_0$

$\Phi_2$

$M_3$    M    3    D

1

$\Phi_1$

2

$M_2$      $M_1$

$S_0$

# FIG.9

1

$M_3$    M    D    A

$\Phi$    3    $V_D$    $V_S$

2

$V_C$

$M_2$    $M_1$    OSC

M

$\Phi$

# FIG.11

2

# FIG.12

$E_1$

$\Phi$ 120

2

$E_2$

$V_C$

# FIG.13

$E_2$ $E_1$

130

$V_C$

2

$\Phi$

# FIG.14

# FIG.15